# EUROPÄISCHE PATENTSCHRIFT

(11) **EP 2 326 452 B1**
(45) Veröffentlichungstag und Bekanntmachung des Hinweises auf die Patenterteilung: **27.11.2013**
(21) Anmeldenummer: 09771826.6
(22) Anmeldetag: 03.06.2009
(51) Int. Cl.: B23K 9/00, B23K 9/095, B23K 37/04, G09B 19/00, G09B 19/24, G09B 23/06, G09B 25/02

(54) **VERFAHREN ZUR ERZEUGUNG EINES ZWEIDIMENSIONALEN BILDES AN EINER AUSGABEVORRICHTUNG ÜBER EINE VISUALISIERUNGSVORRICHTUNG**
METHOD OF CREATING A TWO DIMENSIONAL IMAGE ON A DISPLAY THROUGH A VISUALISING DEVICE
PROCEDE DE CREATION D'UNE IMAGE BIDIMENSIONELLE SUR UN AFFICHEUR AU TRAVERS D'UN DISPOSITIF DE VISUALISATION

(30) Priorität: 04.07.2008 AT 10622008
(43) Veröffentlichungstag der Anmeldung: 01.06.2011
(60) Teilanmeldung: 12156776.2
(73) Patentinhaber: Fronius International GmbH, 4643 Pettenbach (AT)
(72) Erfinder: KREINDL, Josef, A-4611 Buchkirchen (AT); GLANSECK, Stefan, A-4614 Marchtrenk (AT)
(74) Vertreter: Sonn & Partner Patentanwälte
(86) Internationale Anmeldenummer: PCT/AT2009/000225
(87) Internationale Veröffentlichungsnummer: WO 2010/000003

(56) Entgegenhaltungen:
- FR-A- 1 456 780
- GB-A- 2 435 838
- US-A- 4 124 944
- US-A- 4 689 021
- US-A- 4 931 018
- US-A1- 2003 023 592
- US-A1- 2003 025 884
- US-A1- 2003 234 885
- US-A1- 2006 214 924
- US-B1- 6 331 848
- US-B1- 6 572 379
- VRSIM: "SIM WELDER GMAW" INTERNET ARTICLE, [Online] Mai 2007 (2007-05), XP002545702 Gefunden im Internet: URL:http://www.simwelder.com> [gefunden am 2009-09-14] in der Anmeldung erwähnt
- CHUANSONG WU: "MICROCOMPUTER-BASED WELDER TRAINING SIMULATOR" COMPUTERS IN INDUSTRY, Bd. 20, Nr. 3, 1. Oktober 1992 (1992-10-01), Seiten 321-325, XP000305597 ELSEVIER SCIENCE PUBLISHERS. AMSTERDAM, NL ISSN: 0166-3615

## Beschreibung

Die Erfindung betrifft ein Verfahren zur Erzeugung eines zweidimensionalen Bildes an einer Ausgabevorrichtung über eine Visualisierungsvorrichtung für die Simulation eines Schweißprozesses durch einen Benutzer, wie es im Oberbegriff des Anspruchs 1 beschrieben ist (siehe, z.B., "VRSIM: SIM WELDER GMAW").

Es sind bereits unterschiedliche visuelle Schweißsysteme bekannt. Beispielsweise ist unter www.simwelder.com ein visuelles Schweißsystem gezeigt, welches aus einem Basiselement, einem Schweißstand und einem Werkstückelement gebildet wird. Im Basiselement ist die Rechnereinheit zur Berechnung des Schweißprozesses und ein Bildschirm zur Darstellung des Schweißprozesses angeordnet. Weiters ist mit dem Basiselement ein Schweißbrenner über ein Schlauchpaket angeschlossen, mit dem eine visuelle Schweißung an einem im Schweißstand positionierten zur Simulation dienenden Werkstück berührungslos durchgeführt werden kann. Hierzu weist der Schweißstand eine Aufnahmevorrichtung in Form eines U-förmigen Rahmens mit einer Befestigungsvorrichtung auf, in die unterschiedliche Schiebeelemente mit daran befestigten zur Simulation dienenden Werkstücken eingeschoben werden können. Damit können die Schiebeelemente mit den unterschiedlichen Werkstücken über die Befestigungsvorrichtung immer in der gleichen Position am Schweißstand befestigt werden. Die Positionserfassung des Schweißbrenners im Bezug zum Werkstück erfolgt über ein magnetisches Positionsüberwachungssystem, insbesondere mit einem sogenannten Polhemus-Tracker.

Ein wesentlicher Nachteil bei diesem visuellen Schweißsystem besteht darin, dass dieses einen sehr großen Platzbedarf in Anspruch nimmt. Wird dieses visuelle Schweißsystem aufgebaut, so muss nach dem Aufstellen der einzelnen Systeme, insbesondere des Basiselementes und des Schweißstandes zuerst eine genaue Kalibrierung der beiden Elemente zueinander durchgeführt werden, wobei anschließend die beiden Elemente, insbesondere das Basiselement und der Schweißstand nicht mehr verschoben werden dürfen, da ansonst eine neuerliche Kalibrierung durchgeführt werden muss.

Ein weiterer Nachteil liegt darin, dass bei diesem bekannten System nur eine VR (Virtual Reality)-Brille benutzt werden kann.

Da nicht alle Menschen VR-Brillen aus unterschiedlichen Gründen (Fehlsichtigkeit, Brillenträger) tragen können, werden durch ein System, das nur auf Visualisierung mit der VR-Brille setzt, gewisse Nutzer ausgeschlossen.

Die Aufgabe der vorliegenden Erfindung liegt darin, ein oben genanntes Verfahren für die Simulation eines Schweißprozesses zu schaffen, mit welchem der Prozess möglichst realistisch simuliert und möglichst einfach bedient werden kann. Nachteile bekannter Vorrichtungen und Verfahren sollen vermieden oder reduziert werden.

Die Aufgabe der Erfindung wird dadurch gelöst, dass die Visualisierungsvorrichtung in Form eines Schweißschirms oder einer Kappe für den Benutzer ausgebildet wird und an der Visualisierungsvorrichtung ein Sensor der Positionsüberwachungsvorrichtung angeordnet wird und die Visualisierungsvorrichtung als Kamera mit einer speziellen Dämpfung für die Bewegung eingesetzt wird, wobei sich zu Beginn der Schweißsimulation ein Zielpunkt der Visualisierungsvorrichtung statisch in der Mitte des Werkstückes befindet, welcher Zielpunkt beim Annähern des Schweißbrenners an das Werkstück dynamisch am jeweiligen Durchdringungspunkt der Verlängerung einer Brennerachse und dem Werkstück verändert wird. Vorteilhaft ist hierbei, dass es bei einer derartigen Simulation nicht notwendig ist, eine 3D-Brille einzusetzen, die den Nachteil hat, dass diese an allfällige Sehschwächen eines Benutzers angepasst werden müsste, sondern hier ein System geschaffen wurde, bei dem jeder Benutzer ohne große Anpassungen eine Schweißsimulation durchführen kann. Ein weiterer Vorteil liegt darin, dass bei Verwendung eines Schweißschirms als Visualisierungsvorrichtung sich der Benutzer an die Verwendung des Schweißschirmes gewöhnen kann und gleichzeitig die schlechten Seheigenschaften bei einem Schweißhelm trainieren kann.

Die vorliegende Erfindung wird anhand der beigefügten, schematischen Zeichnungen näher erläutert. Darin zeigen:
- Fig. 1: eine schaubildliche Darstellung einer in einem Koffer angeordneten Vorrichtung für die Simulation eines Schweiß-prozesses;
- Fig. 2: die Vorrichtung für die Simulation eines Schweißprozesses im aufgebauten Zustand;
- Fig.3: einen Schweißbrenner mit integrierten Sensoren für die Simulationsvorrichtung, in vereinfachter, schematischer Darstellung;
- Fig.4: eine Haltevorrichtung zum Einlegen eines Werkstückes für die Simulationsvorrichtung, in vereinfachter, schematischer Darstellung;
- Fig.5: ein Werkstück zum Einlegen in die Haltevorrichtung für die Simulationsvorrichtung zum Trainieren einer Kehlnaht, in vereinfachter, schematischer Darstellung;
- Fig.6: ein weiteres Werkstück zum Trainieren einer Kehlnaht mit ausgebildeter ersten Schweißraupe;
- Fig.7: ein anderes Werkstück zum Einlegen in die Haltevorrichtung zum Trainieren einer Stumpfnaht, in vereinfachter, schematischer Darstellung;
- Fig.8: das Werkstück gemäß Fig.7 in umgedrehter Position mit ausgebildeter ersten Schweißraupe;
- Fig.9: eine schaubildliche Darstellung für die Anzeige im statischen Zustand der Visualisierungsvorrichtung;
- Fig. 10: eine schaubildliche Darstellung für die Anzeige im dynamischen Zustand der Visualisierungsvorrichtung;
- Fig. 11: eine schaubildliche Darstellung zur automatischen Erkennung der Händigkeit eines Benutzers am Beispiel eines Linkshänders bei der Verwendung eines Werkstücks zum Training einer Kehlnaht;
- Fig. 12: eine schaubildliche Darstellung zur automatischen Erkennung der Händigkeit eines Benutzers am Beispiel eines Rechtshänders bei Verwendung eines Werkstückes zum Training einer Kehlnaht;

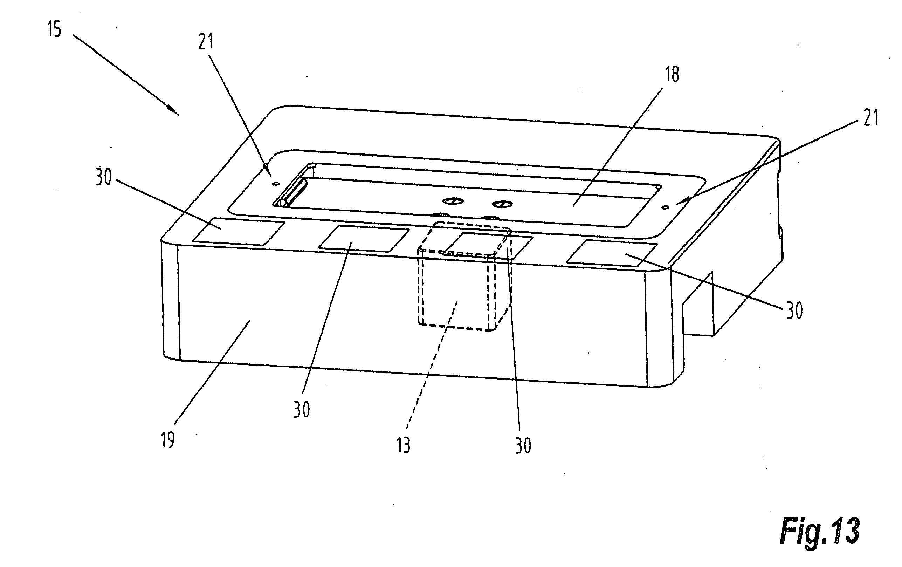

- Fig. 13: eine Haltevorrichtung mit gekennzeichneten, definierten Bereichen zur Auswahl mit dem Schweißbrenner, in vereinfachter, schematischer Darstellung; und
- Fig. 14: einen Schweißbrenner mit eingebauter Lichtquelle zur Simulierung eines Lichtbogens, in vereinfachter, schematischer Darstellung.

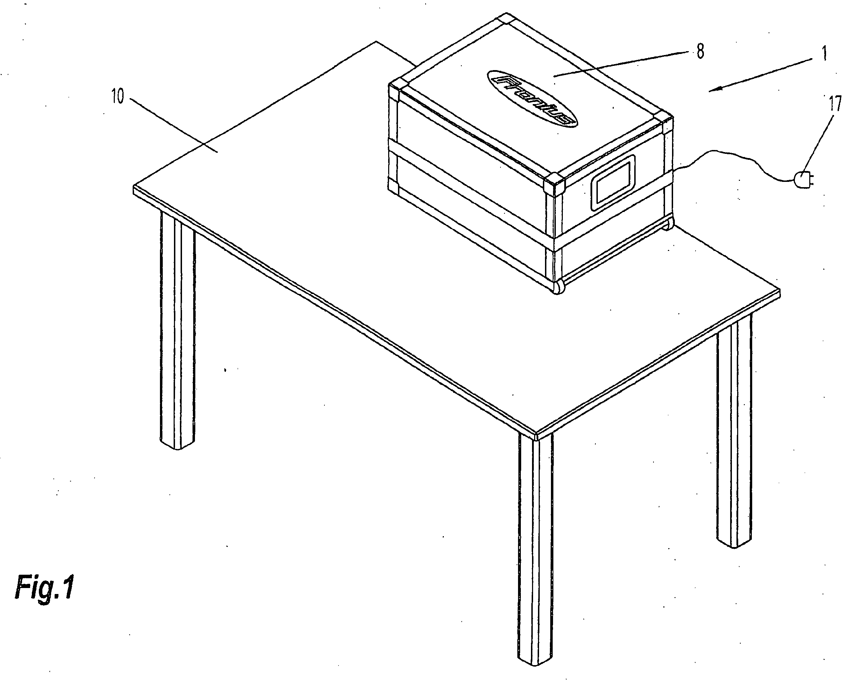

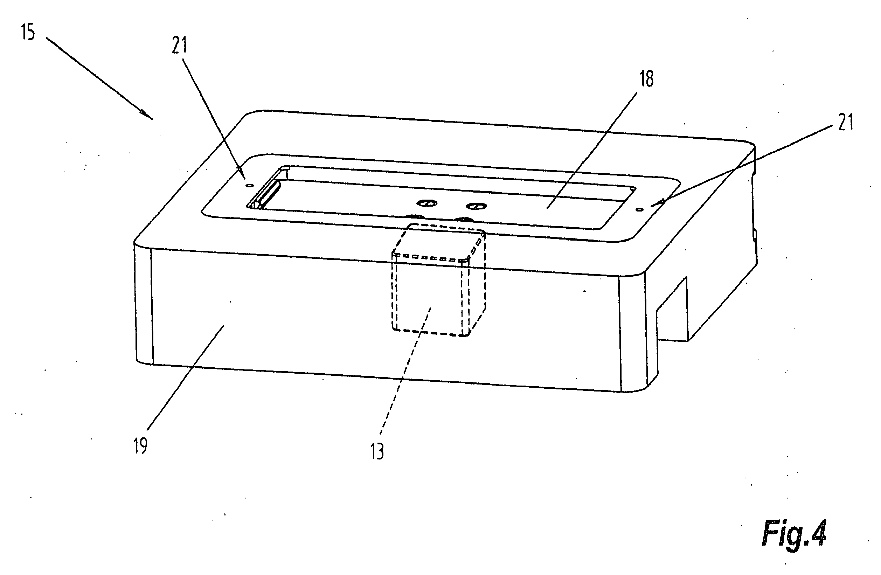

In den Figuren 1 bis 12 ist eine Vorrichtung 1 zur Simulation eines Schweißprozesses dargestellt. Grundsätzlich ist hierzu zu erwähnen, dass bei einer derartigen Vorrichtung 1 kein tatsächlicher Schweißprozess durchgeführt wird, sondern dass über eine auf einem Computer 2 laufende Software ein Schweißprozess simuliert und virtuell dargestellt wird. Dabei kann von einem Benutzer über einen handelsüblichen Schweißbrenner 3, der für eine derartige Anwendung entsprechend umgebaut wurde, ein Schweißprozess trainiert werden, d.h., die Führung des Schweißbrenners 3 im Bezug zu einem Werkstück 4 geübt werden kann. Derartige Simulations- bzw. Trainings-Systeme haben den Vorteil, dass der Benutzer einen Schweißprozess beliebig oft üben kann, ohne dabei entsprechendes Zusatzmaterial für den Schweißprozess zu verbrauchen und gleichzeitig keine Werkstücke bzw. Gegenstände zu benötigen, welche anschließend als Ausschuss ausgeschieden werden müssten. Somit kann ein Schweißer beispielsweise auf einen neuen Schweißprozess eingeschult werden oder es kann neuen Benutzern auf einfache Weise das Schweißen leichter beigebracht werden, bevor diese auf den tatsächlichen Werkstücken bzw. Gegenständen das Schweißen ausüben.

Wesentlich bei derartigen Systemen ist die Positionsbestimmung der einzelnen Komponenten in Echtzeit zueinander. Die Position des Schweißbrenners 3 zum Werkstück 4 und die Position der Augen des Benutzers, also des Sichtwinkels, soll möglichst in Echtzeit erfasst, ausgewertet und dargestellt werden. Beim beschriebenen Ausführungsbeispiel wird hierfür eine magnetischer Positionsüberwachungsvorrichtung 5 eingesetzt, welche beispielsweise aus einem zum Stand der Technik zählenden Polhemus-Tracker, Polhemus-Geber, sowie Polhemus-Sensoren gebildet werden, über die die Positionen, Abstände und Geschwindigkeiten der Komponenten erfasst werden und anschließend von einer auf einem Computer 2 laufenden Software in ein virtuelles Bild mit den zugehörigen Schweißbedingungen, wie beispielsweise dem Lichtbogen, der gebildeten Schweißraupe, usw., umgewandelt werden und entweder auf einer Anzeigevorrichtung 6, insbesondere einem handelsüblichen Bildschirm 7, oder einer 3D-Brille dargestellt wird.

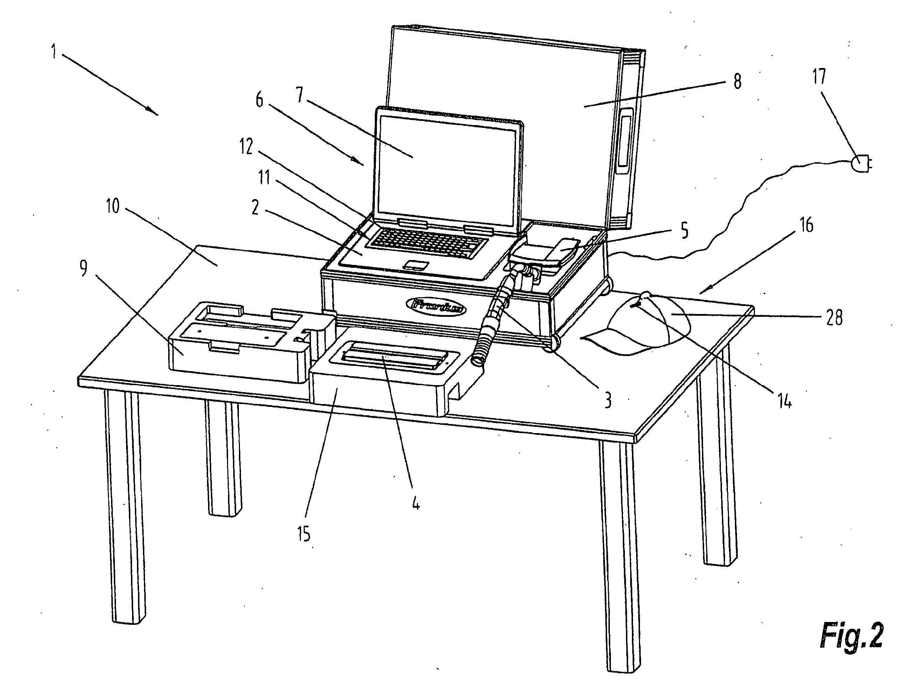

Bei der dargestellten Lösung handelt es sich um einen kompakten, leichten und tragbaren Aufbau, der von einem Benutzer leicht handzuhaben ist und getragen und aufgebaut werden kann, ohne dass dazu spezielle Kenntnisse benötigt werden. Dabei können alle benötigten Komponenten in einem handelsüblichen Koffer 8, wie in Fig. 1 ersichtlich, integriert werden. Wie aus Fig. 2 ersichtlich, sind im Koffer 8 entsprechende Einlagen 9 bzw. Elemente angeordnet, in denen die einzelnen Komponenten positioniert sind. Die Komponenten können vom Benutzer herausgenommen werden, aufgebaut und verwendet werden. Der Benutzer kann alle Komponenten im Koffer 8 verstauen und leicht einen Ortswechsel durchführen, ohne dass zusätzliche Personen benötigt werden. Die Vorrichtung 1 kann einfach platzsparend auf einem Tisch 10 oder einem Arbeitsplatz aufgebaut werden. Somit wird erreicht, dass speziell für neue anzulernende Schweißer diese den Koffer 8 beispielsweise mit nach Hause nehmen und dort entsprechende Schweißübungen durchführen können.

Die einzelnen Komponenten der Vorrichtung 1 für die Simulation eines Schweißprozesses bestehen aus einem Computer 2 mit einer Eingabevorrichtung 11, insbesondere einer Tastatur 12 und/oder einer Maus, und einer Ausgabevorrichtung 6, einem Schweißbrenner 3, einer magnetischen Positionsüberwachungsvorrichtung 5 mit zumindest einem Geber 13 und mehreren Sensoren 14, einer Haltevorrichtung 15 für ein simuliertes Werkstück 4 und einer Visualisierungsvorrichtung 16. Übersichtshalber wurden die Verbindungsleitungen zwischen den Komponenten nicht dargestellt. Um einen einfachen Aufbau zu erreichen, wurden die Verbindungsstecker für die Verbindungsleitungen derart ausgelegt, dass immer nur ein Verbindungssteckerpaar existiert, sodass der Benutzer beim Aufbau keine falschen Verbindungen herstellen kann.

Bevorzugt sind jedoch die Komponenten bereits untereinander verbunden, sodass diese nur noch aus dem Koffer 8 herausgenommen werden müssen. Lediglich ist es für den Benutzer notwendig, dass eine Stromversorgung mit dem Koffer 8 hergestellt werden muss, um die einzelnen Komponenten mit Energie zu versorgen. Dazu kann am Koffer 8 ein Anschluss vorgesehen sein, an dem der Benutzer ein übliches Strom-Anschlusskabel 17 anschließen kann. Im Koffer 8 ist ein Versorgungssystem (nicht dargestellt) angeordnet, welches mit allen Komponenten verbunden ist, sodass diese gleichzeitig mit elektrischer Energie versorgt werden können. Der Benutzer muss lediglich mit einem Kabel den Koffer 8 an eine Steckdose anschließen, um alle Komponenten mit Energie zu versorgen.

Da bei der Verwendung magnetischer Positionsüberwachungsvorrichtungen elektrisch und magnetisch leitende Materialien Störungen hervorrufen können, ist der Koffer 8 bevorzugt aus einem elektrisch und magnetisch nicht leitendem Material, wie beispielsweise Kunststoff ausgebildet. Dadurch kann der Koffer 8 in den Aufbau integriert werden ohne dass Störungen vom Koffer 8 verursacht werden. Der Koffer 8 kann beispielsweise Führungsschienen, Halterungen, usw., aufweisen, in welchen die einzelnen Komponenten befestigt werden können. Beispielsweise wäre es möglich, die Haltevorrichtung 15 für das Werkstück 4 am Koffer 8 zu befestigen.

Bevorzugt wird beim Aufbau der Vorrichtung 1 die Haltevorrichtung 15 samt den dazugehörigen Werkstücken 4, der Schweißbrenner 3 und die Visualisierungsvorrichtung 16 aus dem Koffer 8 entnommen und auf einen Arbeitsplatz bzw. Tisch 10 aufgestellt, wogegen die weiteren Komponenten, wie der Computer 2 und die Positionsüberwachungsvorrichtung 5, vorzugsweise im Koffer 8 verbleiben. Die notwendigen Leitungsverbindungen (nicht dargestellt) zwischen den Komponenten untereinander sind bereits vorhanden sodass vom Benutzer keine zusätzlichen Verbindungen hergestellt werden müssen. Hierzu ist der Computer 2 mit der Eingabevorrichtung 11, insbesondere Tastatur 12, und der Ausgabevorrichtung 6, insbesondere Bildschirm 7, mit dem Schweißbrenner 3, der magnetischen Positionsüberwachungsvorrichtung 5, an der zumindest ein Geber 13 und mehrere Sensoren 14 angeschlossen ist, und der Visualisierungsvorrichtung 16 verbunden. Der Geber 13 ist an der Haltevorrichtung 15, insbesondere im Inneren der Haltevorrichtung 15, für das zur Simulation dienende Werkstück 4 und zumindest jeweils ein Sensor 14 zumindest an der Visualisierungsvorrichtung 16 und dem Schweißbrenner 3 positioniert. Beim dargestellten Ausführungsbeispiel kommt ein einziger Geber 13 und mehrere Sensoren 14 zum Einsatz, die in den einzelnen Komponenten integriert sind und mit der magnetischen Positionsüberwachungsvorrichtung 5, verbunden sind. Durch eine derartige Ausgestaltung, bei der sämtliche Komponente für eine Simulationsvorrichtung 1 bzw. virtuelle Schweißvorrichtung in einem tragbaren Koffer 8 verstaut werden können und beim Aufbau vom Benutzer lediglich entsprechende Komponente aus dem Koffer 8 entnommen werden müssen, wird eine hohe Bedienerfreundlichkeit erreicht, da der Benutzer keine Verkabelungen mehr vornehmen muss.

Für die Simulation eines Schweißprozesses wird ein sogenanntes simuliertes oder zur Simulation dienendes Werkstück 4 benötigt. An diesem Werkstück 4 wird kein tatsächlicher Schweißvorgang durchgeführt, sondern das Werkstück 4 dient nur zur Orientierung für die Führung des Schweißbrenners 3. Hierzu wurde die Haltevorrichtung 15 geschaffen, die in einfacher Form auf einen Arbeitsplatz bzw. Tisch 10 gestellt wird und in die das Werkstück 4 einsetzbar ist. Die Haltevorrichtung 15 ist derart ausgebildet, dass diese je nach Art der zu übenden Schweißung, also horizontale oder senkrechte Schweißung, orientiert werden kann. Die Haltevorrichtung 15 kann einfach gedreht werden und es ist trotzdem eine Positionserkennung ohne neuerliche Kalibrierung möglich, wobei eine automatische Erkennung der Lage aufgrund der Position des Schweißbrenners 3 durchgeführt wird und das Bild an der Anzeigevorrichtung 6 entsprechend gedreht bzw. dargestellt wird. Somit können mit einem Werkstück 4 zumindest zwei Schweißabläufe, nämlich ein horizontaler und ein senkrechter Schweißvorgang, geübt werden, indem die Haltevorrichtung 15 einfach gedreht wird, also auf die Stirnfläche gestellt wird, und der Benutzer mit dem Schweißbrenner 3 anschließend das Werkstück 4 entsprechend abfährt.

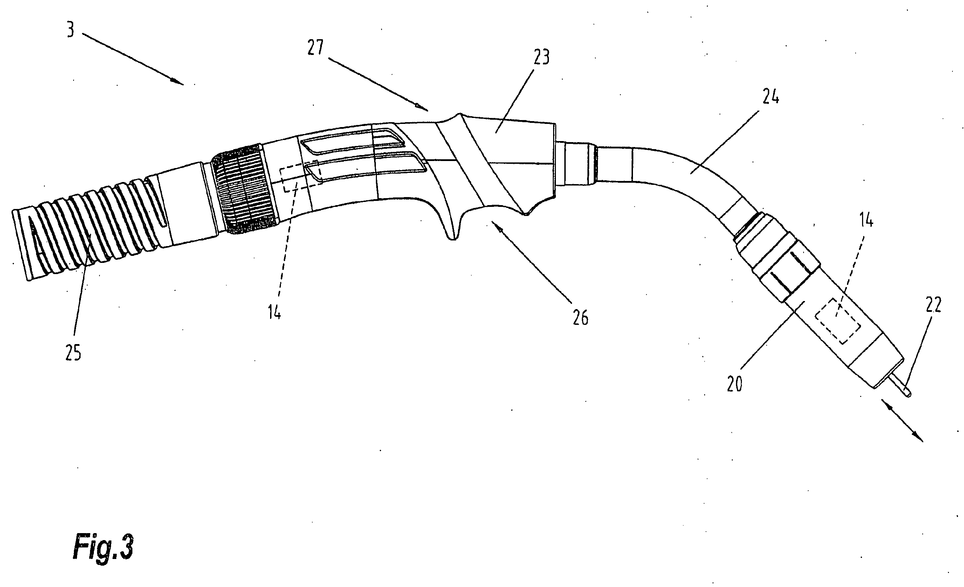

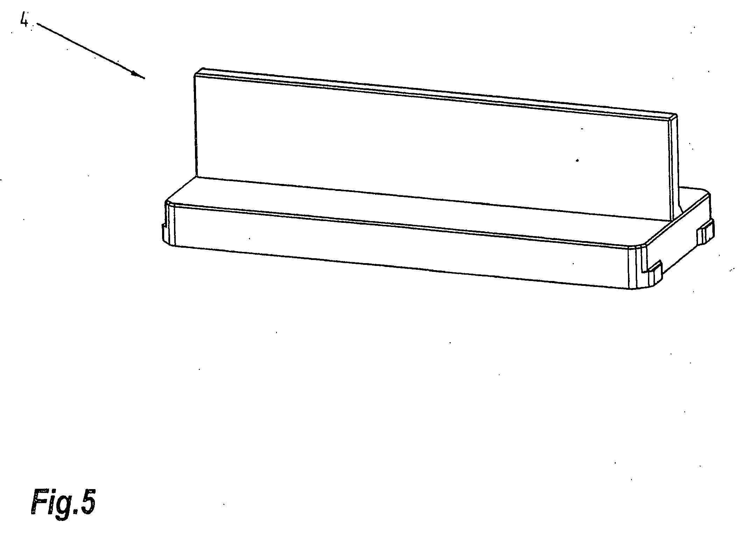

Damit mehrere unterschiedliche Schweißprozessarten trainiert werden können, können in die Haltevorrichtung 15 unterschiedliche Werkstücke 4 eingesetzt werden, die in den Figuren 5 bis 8 dargestellt sind. Hierzu weist die Haltevorrichtung 15 eine Vertiefung 18 auf, in die die unterschiedlichsten Werkstücke 4 einsteckbar sind. Unterhalb der Vertiefung 18 der Haltevorrichtung 15 ist in einer möglichst geringen Distanz zum Werkstück 4 der Geber 13 der Positionsüberwachungsvorrichtung 5 angeordnet. Bevorzugt ist die Haltevorrichtung 15 in Form einer kleinen, tragbaren Box 19 zum Aufstellen auf einen Tisch 10 ausgebildet. Die Box 19 und das einsetzbare Werkstück 4 sind wiederum aus einem elektrisch und magnetisch nicht leitenden Material, insbesondere Kunststoff, ausgebildet, sodass keine Störungen von diesen Komponenten bei der Positionsbestimmung verursacht werden können. Wichtig ist hierbei, dass durch die zentrale Position des Gebers 13 in der Haltevorrichtung 15 unterhalb des Werkstückes 4 eine minimale Entfernung zum Sensor 14 im Schweißbrenner 3 bei einer simulierten Schweißung vorhanden ist und somit eine sehr genaue Positionserkennung durchgeführt werden kann. Selbstverständlich kann an jedem Werkstück 4 ein Geber 13 angeordnet werden und dieser Geber 13 beim Einstecken des Werkstücks 4 in die Box 19 automatisch kontaktiert und mit der Positionsüberwachungsvorrichtung 5 verbunden werden. Bei der Anordnung der Sensoren 14 ist es wesentlich, dass diese so nah wie möglich am Geber 13 positioniert sind. Ein Sensor 14 im Schweißbrenner 3 wird beispielsweise bevorzugt in einer Gasdüse 20 positioniert, da die Gasdüse 20 den Endbereich des Schweißbrenners 3 ausbildet und bei einem simulierten Schweißprozess sehr nahe an das Werkstück 4 herangeführt wird, wie dies aus Fig. 3 ersichtlich ist. Somit ist eine sehr kurze Distanz zwischen dem Geber 13 unterhalb des Werkstückes 4 bzw. der Vertiefung 18 und dem über die Gasdüse 20 herangeführten Sensor 14 im Schweißbrenner 3 gegeben, sodass eine sehr genaue Auswertung der Position des Schweißbrenner 3 im Bezug zum Werkstück 4 ermöglicht wird. Weiters wird durch die fixe Anordnung des Gebers 13 in der Haltevorrichtung 15 unterhalb des Werkstückes 4 bzw. der Vertiefung 18 erreicht, dass der Benutzer keine Kalibrierung durchführen muss. Es ist natürlich vorgesehen, dass auf der Haltevorrichtung 15 zumindest zwei Kalibrierungspunkte 21 gekennzeichnet sind, über die der Benutzer nach Aufruf der Kalibriersoftware den Schweißbrenner 3, insbesondere mit einem am Schweißbrenner 3 angeordneten Stift 22, auf die Punkte positioniert und somit neu kalibriert wird.

Um dem Benutzer das Gefühl wie bei einer realen bzw. echten Schweißung zu vermitteln, wird der Schweißbrenner 3 durch einen Brennergriff 23, einen Rohrbogen 24 und ein Schlauchpaket 25 aufgebaut. Der Schweißbrenner 3 weist die selben Abmessungen und das selbe Gewicht wie ein echter Schweißbrenner auf und ist über eine Leitungsverbindung, insbesondere das Schlauchpaket 25, mit dem Computer 2 verbunden. Damit können die am Schweißbrenner 3 integrierten Elemente vom Benutzer, wie bei einem richtigen Schweißbrenner, benutzt werden. Bevorzugt ist am Brennergriff 23 ein Startschalter 26 zur Aktivierung des simulierten Schweißprozesses angeordnet. Am Brennergriff 23 können jedoch noch zusätzliche Schaltelemente 27 zur Verstellung der vorgebbaren Schweißparameter, wie beispielsweise Drahtvorschub, Spannung, Strom usw., angeordnet sein. Damit auch die Position des Schweißbrenners 3 zum Werkstück 4 ermittelt werden kann, ist der Schweißbrenner 3 auch mit der Positioniervorrichtung 5 verbunden, wobei im Rohrbogen 24, insbesondere im Bereich einer Brennerspitze, also der Gasdüse 20, der Sensor 14 für die Positionsbestimmung angeordnet ist. Hierbei ist wiederum wesentlich, dass der Sensor 14 möglichst nahe an der Brennerspitze positioniert wird, sodass der Abstand zwischen dem Geber 13 unterhalb des Werkstückes 4 und dem Sensor 14 im Schweißbrenner 3 möglichst gering ist, sodass die Messgenauigkeit erhöht wird und äußere Störeinflüsse minimiert werden. Zwischen dem Geber 13 und dem Sensor 13 im Schweißbrenner 3 ist lediglich das Werkstück 4 und die Wandstärke der Box 19 angeordnet, wodurch eine sehr geringe Distanz zwischen dem Geber 13 und dem Sensor 14 im Schweißbrenner 3 vorhanden ist. Weiters kann ein weiterer Sensor 14 im Brennergriff 23 angeordnet werden, sodass eine vollständige Positionsauswertung des Schweißbrenners 3 ermöglicht wird.

Ein wesentliches Detail des Aufbaus liegt darin, dass an der Brennerspitze, also der Gasdüse 20, der Stift 22 zur Simulation eines Schweißdrahtes angeordnet ist, wobei der Stift 22 beweglich in der Brennerspitze gelagert ist, wie dies mit einem Pfeil dargestellt ist. Üblicherweise wird bei bekannten Aufbauten ein Stift 22 verwendet, der fix in der Brennerspritze integriert ist. Durch die bewegliche Lagerung des Stiftes 22 wird erreicht, dass der Benutzer den Schweißbrenner 3 bis an die Gasdüse 20 an das Werkstück 4 heranführen kann, wobei der Stift 22 in den Schweißbrenner 3, also in die Gasdüse 20, hineingedrückt wird. Damit wird erreicht, dass der Benutzer diesen Stift 22 nicht mehr einfach am Werkstück 4 auflegen kann und über den Stift 22 den Schweißbrenner 3 führt, da beim Auflegen des Stifts 22 auf das Werkstück 4 dieser in den Schweißbrenner 3 hineingedrückt bzw. verschoben wird. Somit wird eine besonders realistische Simulation ermöglicht, da der Schweißbrenner 3 noch näher an das Werkstück 4 herangeführt werden kann, als dies bisher der Fall war. Der aus der Gasdüse 20 herausragende Stift 22 kann auch einstellbar ausgebildet sein indem die Länge des aus der Gasdüse 20 herausragenden Stifts 22 verstellbar ist, wodurch unterschiedlich lange "Stick-Outs" trainiert werden können. Dies kann in einfacher Form derart erfolgen, dass an der Gasdüse 20 ein kleines Stellrad angeordnet wird, über das durch Verdrehen die Länge des herausragenden Stifts 22 verstellt werden kann. Selbstverständlich kann diese Verstellung auch automatisiert ausgeführt werden, indem in der Gasdüse 20 beispielsweise ein kleiner Elektromotor integriert ist, über den die Länge des herausragenden Stifts 22 verstellt wird. Eine automatische Anpassung der "Stick-Out"-Länge hat den Vorteil, dass der Benutzer in der Software eine "Stick-out"-Längeneinstellung vornehmen kann, wobei anschließend eine automatische Verstellung vorgenommen wird.

Für eine optimale Simulation ist weiters wesentlich, dass die Position der Augen, insbesondere des Augenwinkels des Benutzers, zum Werkstück 4 und zum Schweißbrenner 3 ermittelt wird, wozu die Visualisierungsvorrichtung 16 eingesetzt wird. Beim dargestellten Aufbau wird eine Visualisierungsvorrichtungen 16 verwendet, d.h. eine Ausführung mit einem Schweißschirm bzw. einer Kappe 28.

Da jedoch die 3D-Brille wesentliche Nachteile aufweist, nämlich an allfällige Sehschwächen eines Benutzers angepasst werden muss, wurde die Visualisierungsvorrichtung 16 entwickelt, bei der keine Anpassungen notwendig sind. Hierzu ist mit der Positionsüberwachungsvorrichtung 5 und/oder dem Computer 2 die Visualisierungsvorrichtung 16, insbesondere ein Schweißschirm oder eine Kappe 28, verbunden, an dem ein Sensor 14 angeordnet ist. Dabei wird der Sensor 14 bevorzugt an einem Traggestell des Schweißschirms oder am höchsten Punkt der Kappe 28 befestigt, sodass sich der Sensor 14 beim Aufsetzen des Benutzers bevorzugt am höchsten Punkt befindet und somit der Sichtwinkel eines Benutzers berechnet werden kann. Der Benutzer setzt sich den Schweißschirm oder die Kappe 28 auf den Kopf und kann damit eine Steuerung der Kamera für die Visualisierung der Szene auf der Anzeigevorrichtung 6, insbesondere dem Bildschirm 7, durchführen, indem er den Kopf bewegt. Der Bildschirm 7 wird bevorzugt derart positioniert, dass dieser direkt hinter dem Werkstück 4 bzw. der Box 19 aufgestellt wird, sodass der Benutzer gleichzeitig das Werkstück 4 und das am Bildschirm 7 gezeigte Bild 29 betrachten kann, da bei dieser Ausführung der Visualisierungsvorrichtung 16 der Benutzer nur am Bildschirm 7 die Schweißsimulation angezeigt bekommt. Die Position der Kamera wird dabei durch einen am Schweißhelm oder der Kappe 28 montierten Polhemus-Sensor und einem im Werkstück 4 montierten Polhemus-Geber ermittelt, sodass aufgrund der Bewegung des Kopfes des Benutzers die Position des Polhemus-Sensors ermittelt wird und ein entsprechender Winkel zum Werkstück 4 und dem Schweißbrenner 3 berechnet werden kann, woraus nunmehr ein entsprechendes Bild 29 am Bildschirm erzeugt wird. Selbstverständlich kann sowohl ein Schweißschirm, als auch eine Kappe 28 verwendet werden wobei sich der Benutzer aussuchen kann, mit welcher Art von Visualisierungsvorrichtung 16 er die Schweißsimulation vornehmen möchte.

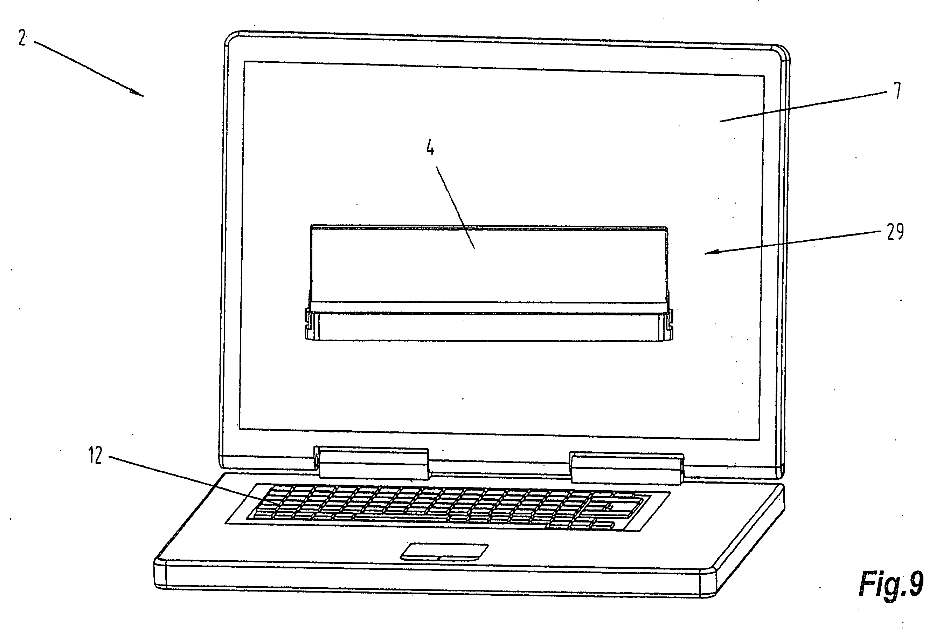

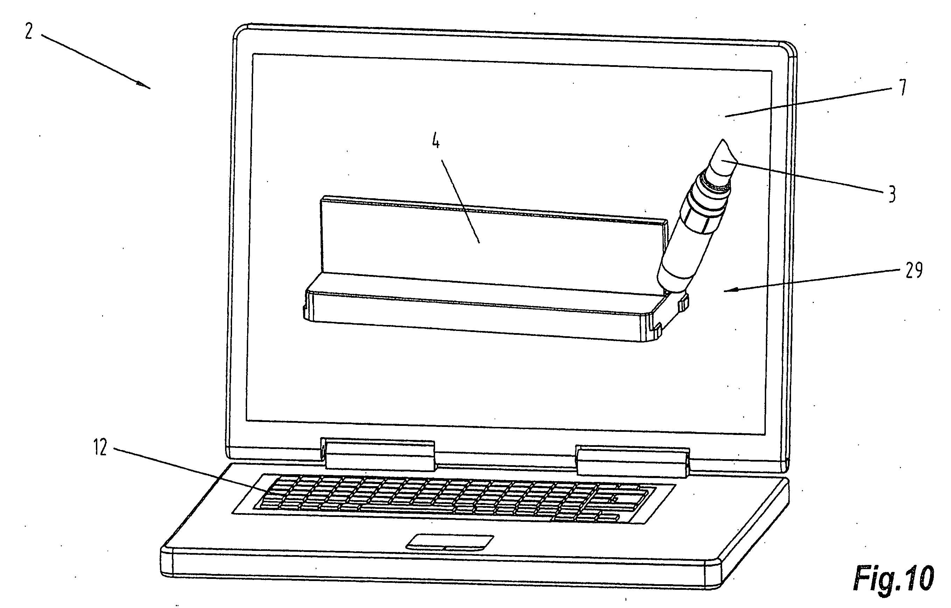

Die Visualisierungsvorrichtung 16 wird gemäß der Erfindung also in Form eines Schweißschirms bzw. einer Kappe 28 ausgebildet und an einem Traggestell der Visualisierungsvorrichtung 16 ein Sensor 14 der Positionsüberwachungsvorrichtung 5 angeordnet. Bei der erfindungsgemäßen Ausbildung wird die Visualisierungsvorrichtung 16 als Kamera mit einer speziellen Dämpfung für die Bewegung des Bildes 29 eingesetzt, wobei zu Beginn der Schweißsimulation sich ein Zielpunkt der Visualisierungsvorrichtung 16 statisch in der Mitte des am Bildschirm 7 dargestellten Werkstückes 4 befindet, und beim Annähern des Schweißbrenners 3 an das Werkstück 4 sich der Zielpunkt dynamisch am jeweiligen Durchdringungspunkt der Verlängerung einer Brennerachse und dem Werkstück 4 verändert, wie dies schematisch in den Figuren 9 und 10 dargestellt ist. Dabei ist auch in Fig. 10 ersichtlich, dass der Benutzer den Schweißbrenner 3 zum Werkstück 4 bewegt hat, da im dargestellten Bild nunmehr der Schweißbrenner 3 übersichtshalber jedoch nur teilweise eingezeichnet erscheint und der Ansichtswinkel nunmehr dynamisch verändert hat. Mit einer derartigen Visualisierungsvorrichtung 16 wird nicht wie mit einer 3D-Brille ein virtuelles Bild in allen Raumrichtungen erzeugt, sondern es ist immer nur ein wesentlicher Bildabschnitt, nämlich das Werkstück 4 am Bildschirm 7 sichtbar. Im Ruhezustand gemäß Fig. 9 wird immer nur der Bereich des Werkstücks 4 angezeigt, egal in welche Richtung der Benutzer mit der aufgesetzten Visualisierungsvorrichtung 16 blickt. Bewegt der Benutzer jedoch den Schweißbrenner 3 in den Anzeigebereich, so wird ein virtueller Schweißbrenner 3 sichtbar und es wird auf eine dynamische Bildanzeige umgeschaltet, sodass die Position des Sensors 14 im Schweißschirm 3 und der Kappe 28 ermittelt wird und eine entsprechende Ansicht des Werkstücks 4 zu der ermittelten Position dargestellt wird. Bewegt der Benutzer den Schweißbrenner 3 wieder aus dem Anzeigebereich, so wird die Positionsauswertung des Sensors 13 im Schweißschirm bzw. der Kappe 28 sozusagen deaktiviert und auf die statische Bildanzeige umgeschaltet. Damit wurde ein einfacher Modus geschaffen, bei dem keine Anpassung von Sehschwächen, wie dies bei 3D-Brillen notwendig ist, vorgenommen werden muss und immer nur das Wesentlichste am Bildschirm 7 dargestellt wird.

Auf den Ablauf einer virtuellen Schweißung wird nicht näher eingegangen, da diese üblichen Softwareabläufen für Simulationen entsprechen. Am Computer 2 ist eine entsprechende Software installiert, die entsprechende Abläufe ermittelt, berechnet und entsprechende Darstellungen der einzelnen Elemente auf dem Bildschirm 7 vornimmt. Lediglich wird kurz erwähnt, dass nach der Inbetriebnahme der Vorrichtung 1 der Benutzer am Computer 2 unterschiedliche Einstellungen vornehmen kann und gleichzeitig die unterschiedlichsten Arten von Schweißprozessen auswählen kann. Weiters ist es möglich, dass der Benutzer noch zusätzlich auswählen kann, ob er Hilfsmittel, wie Kontrollpfeile für die richtige Position des Schweißbrenners 3 bei der Führung des Schweißbrenners 3 entlang des Werkstückes 4, verwenden will oder nicht. Nachdem der Benutzer alle Einstellungen vorgenommen hat und sich für eine Visualisierungsvorrichtung 16, entschieden hat, kann der Benutzer den Schweißbrenner 3 in eine Startposition am Werkstück 4 bringen und anschließend den virtuellen Schweißprozess starten. Hierfür betätigt der Benutzer am Schweißbrenner 3 den Startschalter 26, sodass anschließend der virtuelle Lichtbogen zwischen dem Werkstück 4 und dem Schweißbrenner 3 am Bildschirm 7 gezündet wird. Anschließend führt der Benutzer den Schweißbrenner 3 mit oder ohne Hilfsmittel, wie Abstandspfeilen zur Idealposition, entlang des Werkstückes 4, wobei hierzu am Bildschirm 7 zum virtuellen Bild 29 eine entsprechende Schweißraupe gebildet wird, die aufgrund der Führung des Schweißbrenners 3 errechnet wird. Hat der Benutzer den Schweißprozess beendet, so wird bei der dargestellten Lösung vom Computer 3 nunmehr der durchgeführte Schweißprozess analysiert und über ein integriertes Bewertungssystem entsprechende Punkte vergeben. Gleichzeitig ist es selbstverständlich möglich, dass die wesentlichen Aufzeichnungen, wie beispielsweise Kurzschlüsse usw., vom Benutzer eigenständig abgefragt werden können.

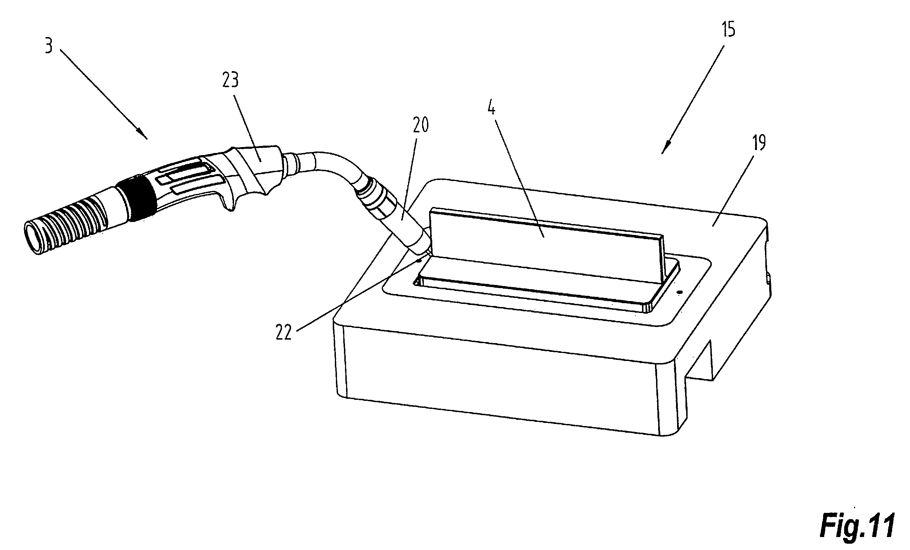

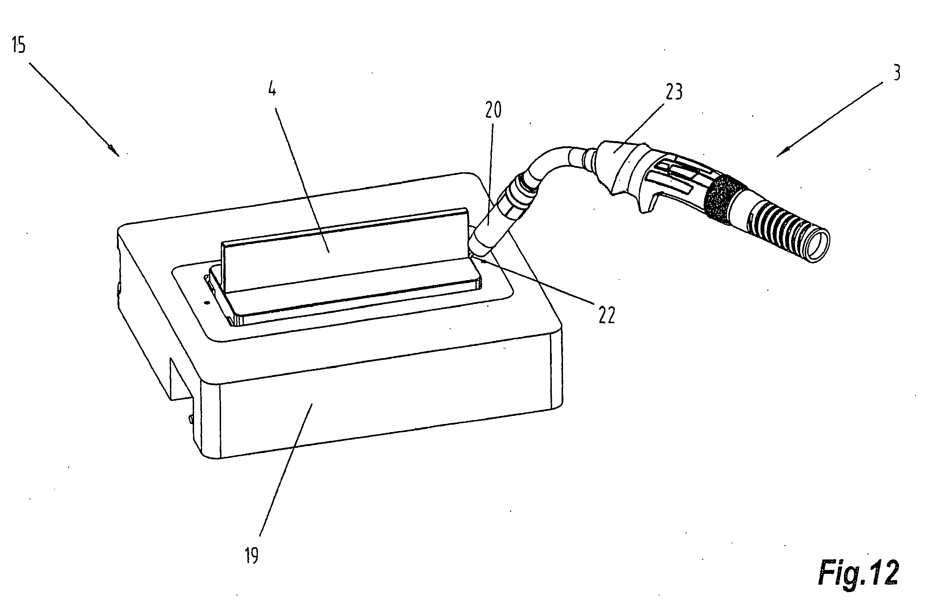

Um die Anwendung für den Benutzer möglichst komfortabel zu gestalten, sind mehrere Hilfsmodule, wie beispielsweise das nachstehend beschriebene Hilfsmodul für eine automatische Erkennung der Händigkeit (Linkshänder/Rechtshänder) des Benutzers, softwaretechnisch integriert, wie anhand der Figuren 11 und 12 dargestellt ist. Hierzu wird ein Erkennungsmodul zur automatischen Erkennung der Händigkeit des Benutzers für die Handhabung des Schweißbrenners softwaretechnisch für die Steuerung der Simulation des Schweißprozesses eingesetzt. Dieses Erkennungsmodul ist in der Software am Computer 2 integriert und der Benutzer muss keine Angaben bzw. Einstellungen, bezüglich seiner Händigkeit vornehmen. Dabei wird vom Erkennungsmodul die Position zwischen Brennergriff 23 und Gasdüse 20 im Bezug auf das in der Haltevorrichtung 15 angeordnete Werkstück 4 ermittelt und ausgewertet und es wird automatisch die entsprechende Software für die Simulation des Schweißprozesses, insbesondere die Darstellung des Bildes 29 vom Schweißbrenner 3, ausgewählt. Um ein derartiges Erkennungsmodul einsetzen zu können, ist es notwendig, dass im Schweißbrenner 3 zumindest zwei Sensoren 14 angeordnet sind, wobei bevorzugt ein Sensor 14 in der Gasdüse 20 und ein Sensor 14 im Brennergriff 23 eingebaut ist, wie dies in Fig. 3 ersichtlich ist. Somit ist es möglich, dass die Position der beiden Sensoren 14 untereinander und im Bezug zum Geber 13 ermittelt werden kann und je nach Stellung des Brennergriffes 23 links oder rechts zum Sensor 14 in der Gasdüse 20 festgestellt werden kann, mit welcher Hand der Benutzer den Schweißbrenner 3 hält. Ist beispielsweise der Sensor 14 im Brennergriff 23 links vom Sensor 14 in der Gasdüse 20 im Bezug zum Werkstück 4 angeordnet, so hält der Benutzer den Schweißbrenner 3 mit der linken Hand, wie in Fig. 11 dargestellt, und die Software aktiviert die Darstellung am Bildschirm 7 für einen Linkshänder. Ist hingegen der Sensor 14 im Brennergriff 23 rechts vom Sensor 14 in der Gasdüse 20 und im Bezug zum Werkstück 4 angeordnet, so wird der Schweißbrenner 3 mit der rechten Hand gehalten, wie in Fig. 12 dargestellt, und die Software wählt die Darstellung des Schweißbrenners 3 am Bildschirm 7 für Rechtshänder.

Weiters ist ein Hilfsmodul zur Verbesserung der Eingabefreundlichkeit angeordnet, bei dem nunmehr der Schweißbrenner 3 zusätzlich als Eingabemittel dient. Hierzu ist zumindest ein definierter Bereich 30 der Haltevorrichtung 15 als Eingabemodul mit hinterlegten Funktionen ausgebildet, sodass durch Positionierung des Schweißbrenners 3 und Aktivierung des Startschalters 26 am Schweißbrenner 3 die diesen Bereichen 30 hinterlegten Funktionen ausgewählt und aktiviert werden können. Somit muss der Benutzer für bestimmte Befehle den Schweißbrenner 3 nicht mehr aus der Hand legen, sondern kann direkt mit dem Schweißbrenner 3 entsprechende Eingaben vornehmen. Dabei wird der definierte Bereich 30 softwaremäßig über die Position an der Box 19 bzw. der Haltevorrichtung 15 definiert und bevorzugt durch einen einfachen Aufkleber an der Haltevorrichtung 15 gekennzeichnet. Somit kann der Benutzer den Schweißbrenner 3 auf diesen Bereich 30 bzw. diese vorgegebenen Positionen positionieren und anschließend durch Betätigen des am Schweißbrenner 3 angeordneten Startschalters 26 die hinter dieser Position hinterlegte Funktion aufrufen und ausführen. Selbstverständlich ein am Bildschirm 7 dargestelltes Zeigerelement kann (nicht dargestellt) durch Anfahren dieser Positionen bzw. Bereiche 30 auf der Haltevorrichtung 15 ebenfalls auf eine entsprechende Position am Bildschirm 7 bewegt werden. Somit besteht auch die Möglichkeit, dass entweder mit einem entsprechenden Eingabegerät wie beispielsweise einer Maus, die selbe Funktion durch die Maus oder den Schweißbrenner 3 aufgerufen werden kann. Durch die Verwendung des Schweißbrenners 3 kann also eine berührungslose Auswahl des Bereichs 30 bzw. der Position durch einfache Ermittlung der Position des Schweißbrenners 3 durchgeführt werden. Durch Berühren des definierten Bereichs 30, also dem Aufkleber, kann auch mit dem simulierten Schweißdraht, also dem Stift 22, ein mit dem Stift 22 verbundenes Schaltelement durch Hineindrücken des Stiftes 22 aktiviert werden und die für diesen Bereich 30 hinterlegte Funktion ausgewählt und aktiviert werden. Damit braucht der Benutzer nicht mehr den Startschalter 26 oder ein anderes Schaltelement 27 betätigen, sondern nur mehr mit der Spitze des Schweißbrenners 3 auf den entsprechenden Bereich 30 drücken. Zum Aktivieren können auch mehrere Möglichkeiten, also beispielsweise die Berührung mit dem Stift 22 oder das Betätigen des Schaltelements 27 bzw. des Startschalters 26 am Brennergriff 23 oder eine am Computer 2 angeschlossene Maus, parallel betrieben werden.

An der Box 19 sind also bestimmte definierte Bereiche 30 für eine Eingabe über den Schweißbrenner 3 angeordnet, wodurch erreicht wird, dass der Benutzer den Schweißbrenner 3 nicht mehr aus der Hand legen muss, um bestimmte Funktionen bzw. Befehle aufzurufen, wodurch die Bedienerfreundlichkeit wesentlich erhöht wird. Eine hinterlegte Funktion für einen Bereich 30 kann beispielsweise Start der Schweißsimulation, Wiederholung der Schweißsimulation, oder Ende der Schweißsimulation, usw., sein. Beispielsweise können die Bereiche 30 auch für eine Bestätigungsschaltfläche, einer Wiederholungsschaltfläche, einer Menüschaltfläche, einer Zurückschaltfläche, ausgebildet sein, sodass bei entsprechender Positionierung und Aktivierung des Schweißbrenners 3 ein entsprechender Befehl am Computer 2 ausgeführt wird.

Zusätzlich kann ein Steuermodul zur Auswahl von an der Ausgabevorrichtung 6 softwaretechnisch dargestellten Schaltflächen bzw. Buttons verwendet werden, wobei bei keiner Simulation des Schweißprozesses dieses Steuermodul aktiviert wird, und die Steuerung eines Zeigerelementes, insbesondere eines Mauszeigers, durch Bewegung des Schweißbrenners 3 in einem bestimmten Bereich bzw. Fläche durchgeführt wird. Die Steuerung des Zeigerelementes am Bildschirm 7, welche üblicherweise mit einer Maus erfolgt, kann nunmehr über den Schweißbrenner 3 durchgeführt werden, sodass der Benutzer nicht immer zwischen Maus und Schweißbrenner 3 wechseln muss. Der Benutzer kann sämtliche Funktionen einer Maus auch mit dem Schweißbrenner 3 durchführen. Hierzu kann auch ein entsprechendes Mauspad verwendet werden, an dem ein weiterer Geber 13 positioniert wird. Führt der Benutzer den Schweißbrenner 3 auf das Mauspad, so wird dies vom zusätzlichen Geber 13 erkannt und von diesem die Position des Schweißbrenners 3 am Mauspad ausgewertet. Die Verwendung eines derartigen Mauspads hat den Vorteil, dass keine umfangreichen Positionsermittlungen notwendig sind, sondern diese auf eine bestimmte Größe des Mauspads beschränkt wird und somit eine Führung des Zeigerelementes einfach möglich ist. Wesentlich ist dabei, dass die Software automatisch erkennt, ob eine Steuerung des Zeigerelementes oder ein Schweißprozess durchgeführt wird. Dies kann in einfacher Art derart erfolgen, dass an der Haltevorrichtung 15 am Werkstück 4 bestimmte Startpositionen festgelegt werden, sodass beim Heranführen des Schweißbrenners 3 an diese Startpositionen und beim Aktivieren des Startschalters 26 am Schweißbrenner 3 eine Simulation gestartet wird, wogegen eine Steuerung des Zeigerelementes durchgeführt wird wenn der Schweißbrenner 3 außerhalb eines vorgegebenen Abstandes zur Startposition ist. Auch kann die automatische Erkennung derart erfolgen, dass immer die nähere Position zum jeweiligen Geber 13 an der Haltevorrichtung 15 oder dem Mauspad ausgewertet wird.

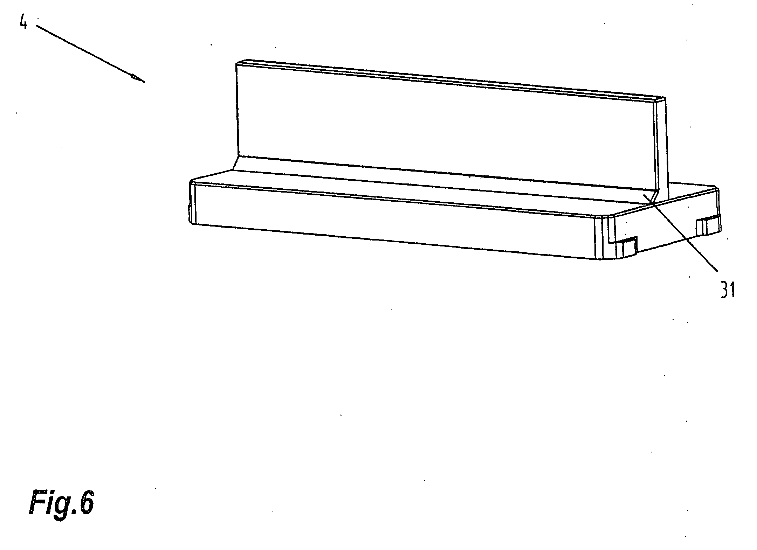

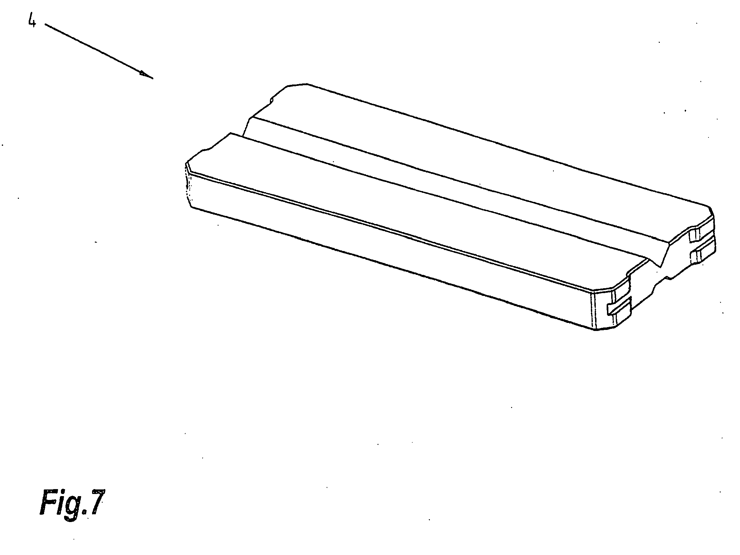

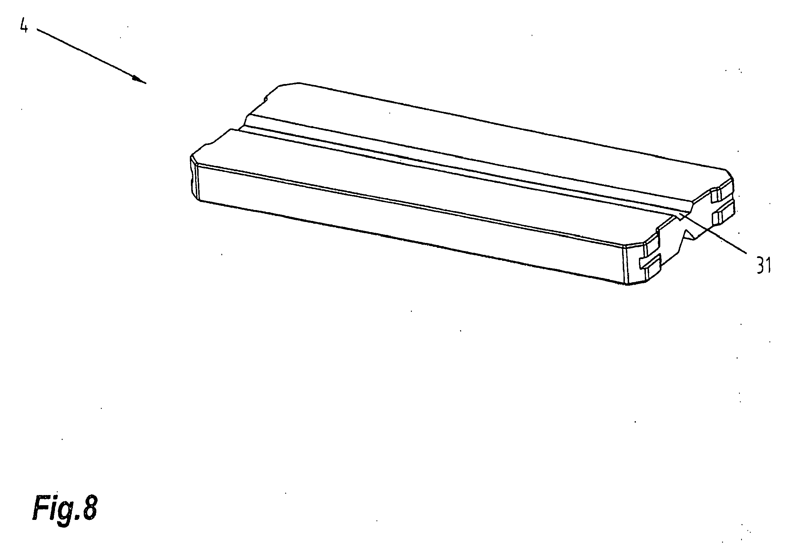

In den Fig. 6 und 8 ist ein Beispiel für die Simulation einer Auftragsschweißung in einer Kehlnaht bzw. einer Stumpfnaht dargestellt. Grundsätzlich besteht das Auftragsschweißen darin, dass mehrere Lagen von Schweißraupen übereinander angeordnet werden. Hierzu ist vorgesehen, dass direkt am einzusetzenden Werkstück 4 die erste Schweißraupe 31 simuliert bzw. ausgebildet wird. Das heißt, dass ein Werkstück 4 mit einer Kehlnaht oder einer Stumpfnaht ohne darin befindliche Schweißraupe 31, wie in den Figuren 5 und 7 dargestellt, vorhanden ist, welches der Benutzer zuerst für die erste Schweißung einlegt und anschließend nach Durchführung der ersten Schweißung, das Werkstück 4 austauscht und durch ein Werkstück 4 mit einer dargestellten, simulierten Schweißraupe 31, gemäß Fig. 6 und 8, einlegt und somit die weiteren Schweißungen durchführen kann. Bei dem dargestellten Beispiel braucht der Benutzer nur das Werkstück 4 umdrehen und wieder in die Haltevorrichtung 15 einlegen, da beide Ausbildungen an einem Werkstück 4 realisiert sind.

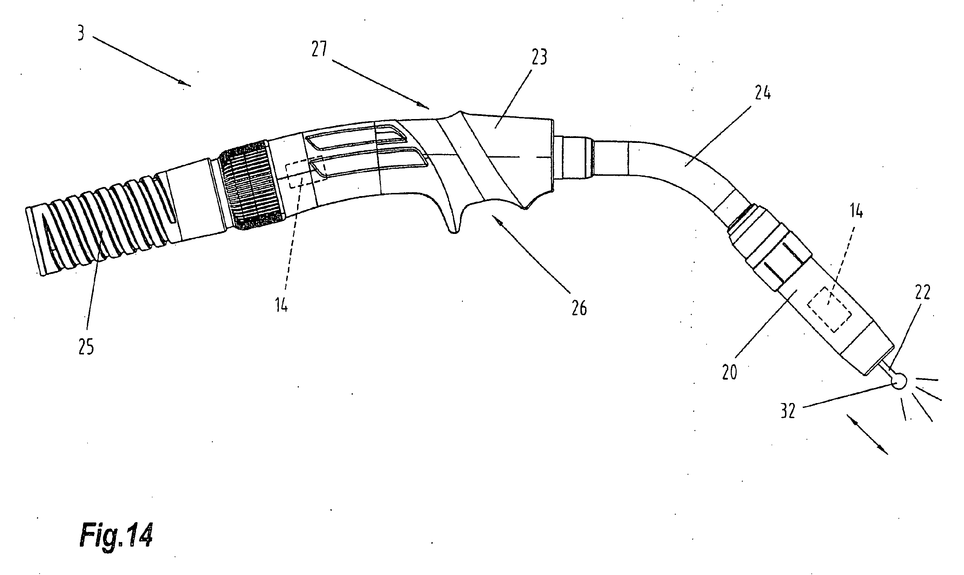

In Fig. 14 ist ein Beispiel eines Schweißbrenners 3 dargestellt, bei dem am Stift 22 oder anstelle des Stiftes 22 eine Lichtquelle 32 angeordnet ist. Diese Lichtquelle 32 hat die Aufgabe, den sehr hellen Lichtbogen einer realen Schweißung zu simulieren, indem beim Durchführen einer Schweißsimulation beim Start der Simulation die Lichtquelle aktiviert und gleichzeitig an der Anzeigevorrichtung 6 der Lichtbogen gezündet wird. Bevorzugt wird hierzu eine Stroposkop-Lichtquelle 32 eingesetzt. Durch die Simulation des Lichtbogens am Schweißbrenner 3 über die Lichtquelle 32 kann auch die Verdunkelung eines Schutzvisiers am Schweißhelm simuliert bzw. eingesetzt werden, indem beim Verwenden eines Schweißschirms als Visualisierungsvorrichtung 16 der am Schweißschirm befindliche Verdunkelungsschirm durch Anlegen einer Spannung abgedunkelt wird. Dies sollte synchron mit dem Aktivieren der Lichtquelle 32 erfolgen. Selbstverständlich kann bei einem automatischen Verdunkelungs-Schweißschirm und entsprechend heller Lichtquelle dies automatisch erfolgen und es muss keine Steuerung vom Computer 2 aus erfolgen. Durch den Einsatz einer Lichtquelle 32 zur Simulation des Lichtbogens wird eine noch realistischere Simulation eines Schweißprozesses erreicht, da der Benutzer einen Schweißhelm verwenden soll und somit auch die schlechten Sichtverhältnisse beim Schweißen trainiert werden können.

Der Koffer 8 kann auch eine externe Schnittstelle (nicht dargestellt) aufweisen,über welche der Koffer 8 mit einem echten Schweißgerät verbunden werden kann. Die externe Schnittstelle ist mit dem Computer 2 verbunden, sodass vom Schweißgerät Daten auf den Computer 2 übertragen werden können. Somit kann sich der Benutzer beispielsweise Daten von einem im Einsatz befindlichen Schweißgerät herunterladen und anschließend zu Hause oder im Büro mit diesen Einstellungen üben. Somit werden Simulationen mit tatsächlich verwendeten Einstellungen möglich, die in einfacher Form überspielt werden können. Wird hierzu der im Koffer 8 angeordnete Computer 2 als Laptop ausgeführt oder weist der Computer eine interne Stromversorgung beispielsweise über Batterien auf, so ist es möglich, dass durch Aktivieren der externen Schnittstelle am Koffer 8, der Computer 2 automatisch startet und hochfährt. Anschließend führt der Computer 2 automatisch eine Datenübertragung durch, sodass die notwendigen Daten vom angeschlossenen Schweißgerät heruntergeladen werden. Der Benutzer muss also lediglich mit dem Koffer 8 zum Schweißgerät gehen, den Koffer 8 über die externe Schnittstelle mit dem Schweißgerät verbinden, worauf die entsprechenden Daten automatisch übertragen werden.

Selbstverständlich können Daten vom Computer 2 im Koffer 8 auch auf das Schweißgerät übertragen werden. Dies erfolgt dann, wenn zuerst über die Schweißsimulation entsprechende Schweißversuche durchgeführt werden, die dann gespeichert werden und anschließend auf ein Schweißgerät übertragen werden.

Eine weitere Möglichkeit zur Verbesserung der Bedienerfreundlichkeit wird dadurch erreicht, dass die Werkstücke 4 und die Box 19 mit einem automatischen Erkennungsmittel, insbesondere einem RFID-Chip und einem RFID-Leser, ausgestattet sind. Damit wird eine automatische Erkennung des verwendeten Werkstückes 4 ermöglicht, wodurch automatisch eine entsprechende Einstellung am Computer 2 vorgenommen wird. Somit wird auch die Bedienerfreundlichkeit des Systems wesentlich erhöht und Fehlerquellen bei der Einstellung können minimiert werden.

## Patentansprüche

1. Verfahren zur Erzeugung eines zweidimensionalen Bildes (29) an einer Ausgabevorrichtung (6) über eine Visualisierungsvorrichtung (16) für die Simulation eines Schweißprozesses durch einen Benutzer, bei dem an einem Computer (2) mit einer Eingabevorrichtung (11) und Ausgabevorrichtung (6) eine Positionsüberwachungsvorrichtung (5) mit zumindest einem Geber (13) und mehreren Sensoren (14), ein Schweißbrenner (3) verbunden wird und mit dem Schweißbrenner (3) eine an einem in einer Haltevorrichtung (15) angeordnetes simuliertes Werkstück (4) ein Schweißprozess simuliert wird, in dem die Position des Schweißbrenners (3) zum Werkstück (4) sowie die Position des Benutzers, insbesondere der Augen, über die Visualisierungsvorrichtung (16) erfasst wird und vom Computer (2) in ein an der Ausgabevorrichtung (6) erzeugtes Bild (29) umgewandelt wird, **dadurch gekennzeichnet, dass** die Visualisierungsvorrichtung (16) in Form eines Schweißschirms oder einer Kappe (28) für den Benutzer ausgebildet wird, und an der Visualisierungsvorrichtung (16) ein Sensor (14) der Positionsüberwachungsvorrichtung (5) angeordnet wird und dass die Visualisierungsvorrichtung (16) als Kamera mit einer speziellen Dämpfung für die Bewegung eingesetzt wird, wobei sich zu Beginn der Schweißsimulation ein Zielpunkt der Visualisierungsvorrichtung (16) statisch in der Mitte des Werkstückes (4) befindet, welcher Zielpunkt beim Annähern des Schweißbrenners (3) an das Werkstück (4) dynamisch am jeweiligen Durchdringungspunkt der Verlängerung einer Brennerachse und dem Werkstück (4) verändert wird.

## Claims

1. Method for generating a two-dimensional image (29) on an output device (6) via a visualization device (16) for the simulation of a welding process by a user, in which a computer (2) is connected to an input device (11) and an output device (6), a position monitoring device (5) having at least one transmitter (13) and a plurality of sensors (14), a welding torch (3), and by means of the welding torch (3) a welding process is simulated on a simulated workpiece (4) arranged in the retaining device (15), in which the position of the welding torch (3) in relation to the workpiece (4) and the position of the user, particulary the user's eyes, are detected via the visualization device (16) and are converted into an image (29) generated on the output device (6) by computer (2), **characterized in that** the visualization device (16) is designed in the form of a welding shield or a cap (28) for the user and that a sensor (14) of the position monitoring device (5) is arranged on the visualization device (16) and that the visualization device (16) is employed as a camera having a special damping for movement, wherein at the beginning of the welding simulation a target point of the visualization device (16) is located statically in the center of the workpiece (4), said target point being changed dynamically at the respective penetration point of the elongation of a torch axis and the workpiece (4) when the welding torch approaches the workpiece (4).

## Revendications

1. Procédé de génération d'une image bidimensionnelle (29) dans un périphérique de sortie (6) par l'intermédiaire d'un dispositif de visualisation (16) pour la simulation d'un processus de soudure par un utilisateur, dans lequel, dans un ordinateur (2) muni d'un périphérique d'entrée (11) et d'un périphérique de sortie (6), un dispositif de surveillance de position (5) comprenant au moins un détecteur (13) et plusieurs capteurs (14), est relié à un chalumeau (3) et, avec le chalumeau (3), une pièce à usiner simulée (4) disposée sur un dispositif de maintien (15) permet de simuler un processus de soudure, dans lequel la position du chalumeau (3) par rapport à la pièce à usiner (4), ainsi que la position de l'utilisateur, en particulier des yeux, est enregistrée par l'intermédiaire du dispositif de visualisation (16) et est transformée, par l'ordinateur (2), en une image (29) générée sur le périphérique de sortie (6), **caractérisé en ce que** le dispositif de visualisation (16) est conçu sous la forme d'un écran de soudure ou d'une casquette (28) pour l'utilisateur, et sur le dispositif de visualisation (16) est disposé un capteur (14) du dispositif de surveillance de position (5), et **en ce que** le dispositif de visualisation (16) est utilisé comme une caméra présentant un amortissement spécial pour le mouvement, un point de visée du dispositif de visualisation (16) se trouvant statiquement, au début de la simulation de soudure, au milieu de la pièce à usiner (4), ce point de visée étant modifié de manière dynamique au point de pénétration de la rallonge d'un axe de chalumeau et au niveau de la pièce à usiner (4) lors de l'approche du chalumeau (3) de la pièce à usiner (4).
